(19) Europäisches Patentamt

European Patent Office

Office européen des brevets

(11) Veröffentlichungsnummer: **0 345 652 B1**

(12) **EUROPÄISCHE PATENTSCHRIFT**

(45) Veröffentlichungstag der Patentschrift: **26.01.94**

(21) Anmeldenummer: **89109978.0**

(22) Anmeldetag: **02.06.89**

Die Akte enthält technische Angaben, die nach dem Eingang der Anmeldung eingereicht wurden und die nicht in dieser Patentschrift enthalten sind.

(51) Int. Cl.⁵: **C08L 69/00**, C08L 51/04

(54) **Verstärkte thermoplastische Formmassen.**

(30) Priorität: **09.06.88 DE 3819722**

(43) Veröffentlichungstag der Anmeldung:
**13.12.89 Patentblatt 89/50**

(45) Bekanntmachung des Hinweises auf die Patenterteilung:
**26.01.94 Patentblatt 94/04**

(84) Benannte Vertragsstaaten:
**DE ES FR GB IT NL**

(56) Entgegenhaltungen:
**EP-A- 0 206 006**
**EP-A- 0 247 257**
**DE-A- 2 653 146**
**DE-A- 3 436 454**

(73) Patentinhaber: **BASF Aktiengesellschaft**
**Carl-Bosch-Strasse 38**
**D-67063 Ludwigshafen(DE)**

(72) Erfinder: **Neumann, Rainer, Dr.**
**Mozartstrasse 2B**
**D-6704 Mutterstadt(DE)**
Erfinder: **Seiler, Erhard, Dr.**
**Erpolzheimer Strasse 1**
**D-6700 Ludwigshafen(DE)**
Erfinder: **McKee, Graham Edmund, Dr.**
**Kastanienweg 8**
**D-6940 Weinheim(DE)**
Erfinder: **Muehlbach, Klaus, Dr.**
**Dr.-Heinrich-Winter-Strasse 19**
**D-6148 Heppenheim(DE)**
Erfinder: **Brandt, Hermann, Dr.**
**Keltenstrasse 30**
**D-6707 Schifferstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

In der japanischen Patentanmeldung 60088072 sind Mischungen aus einem Acrylnitril-Butadien-Styrol-Copolymeren (ABS) und Polycarbonat beschrieben, die Glasfasern als Verstärkungsmittel enthalten, wobei als Schlichte verschiedene Epoxy- oder Aminosilane eingesetzt werden. Durch Zusatz dieser Silane wird die Reißfestigkeit erhöht, jedoch ist die Schlagzahigkeit einer solchen Mischung ungenügend.

Mischungen aus (Meth)acrylat-Butadien-Styrol-Copolymeren und Polycarbonat mit Carbonfasern werden in der japanischen Patentanmeldung 60088062 beschrieben. Die Haftung des Polymeren an den Fasern wird durch Zugabe eines Polyamids erhöht.

In der US-PS 3 654 219 werden glasfaserverstärkte Formmassen aus Acrylnitril-Butadien-Styrol-Copolymeren und Polycarbonat beschrieben. Auch diese Formmassen haben eine unbefriedigende Schlagzähigkeit.

In der US-PS 4 487 881 und der DE-PS 26 53 143 wird vorgeschlagen, die Haftung der Glasfasern in PC/ABS-Mischungen durch Zusatz von Copolymeren zu verbessern, die Maleinsäureanhydrid- bzw. Maleinimideinheiten enthalten. Allerdings wird bei Verwendung eines ausreichenden Anteils an Maleinsäureverbindungen oft eine Gelbverfärbung der Produkte beobachtet.

Mischungen von Polycarbonat (PC) mit einem Pfropfpolymerisat und zwei unterschiedlichen Copolymeren aus Vinylaromaten und ungesättigten Nitrilverbindungen und vorzugsweise Methyl(meth)acrylat werden in der DE-PS 34 36 454 beschrieben. Solche Terpolymere eignen sich jedoch nicht zur Verbesserung der Faserhaftung.

Es bestand daher die Aufgabe, verstärkte thermoplastische Formmassen auf der Basis von ASA bzw. ABS/PC-Mischungen zu schaffen, die eine hohe Festigkeit bei guter Zähigkeit aufweisen, wobei zur Verbesserung der Haftung, insbesondere an Glasfasern, Mittel verwendet werden sollen, die keine Gelbverfärbung der Produkte hervorrufen.

Die Lösung dieser Aufgabe besteht darin, als Mittel zur Verbesserung der Haftfähigkeit des Polymeren an den Glasfasern ein Styrolcopolymerisat zu verwenden, das einpolymerisierte Einheiten des t-Butyl-(meth)acrylats enthält.

Die Erfindung betrifft daher eine verstärkte thermoplastische Formmasse, die enthält, jeweils bezogen auf A + B + C + D + E:

A) 10 bis 75 Gew.-% mindestens eines Polycarbonats A,

B) 10 bis 50 Gew.-% eines Pfropfmischpolymerisats B aus,

jeweils bezogen auf B,

$b_1$) 40 bis 90 Gew.-% mindestens eines Kautschuks mit Glastemperatur unterhalb von 0 °C

$b_2$) 10 bis 90 Gew.-% einpolymerisierten Einheiten mindestens eines vinylaromatischen Monomeren mit bis zu 12 C-Atomen oder Methyl(meth)acrylat und

$b_3$) 50 bis 1 Gew.-% einpolymerisierten Einheiten von (Meth)acrylnitril oder (Meth)acrylsäureestern mit $C_1$-$C_8$-Alkylresten

C) 0 bis 50 Gew.-% eines Copolymeren C aus, jeweils bezogen auf C

$c_1$) 90 bis 50 Gew.-% einpolymerisierten Einheiten, ausgewählt aus der Gruppe von Styrol, $\alpha$-Methylstyrol und einem kernalkylsubstituierten Styrol

$c_2$) 10 bis 50 Gew.-% (Meth)acrylnitril oder Methyl(meth)acrylat

D) 20 bis 0,5 Gew.-% eines Terpolymerisats D aus,

jeweils bezogen auf D

$d_1$ ) 90 bis 50 Gew.-% einpolymerisierten Einheiten mindestens ausgewählt aus der Gruppe von Styrol, $\alpha$-Methylstyrol und einem kernalkylsubstituierten Styrol

$d_2$) 5 bis 40 Gew.-% einpolymerisierten Einheiten von (Meth)acrylnitril und/oder Methyl(meth)acrylat

$d_3$) 5 bis 30 Gew.-% einpolymerisierten Einheiten des Tertiärbutyl(meth)acrylats.

E) 5 bis 50 Gew.-% eines Verstärkungsmittels E.

Schon mit einem geringen Zusatz an Terpolymerisat D wird eine hohe Steifigkeit und gleichzeitig gute Zähigkeit erhalten und es tritt keine Gelbverfärbung der Produkte auf.

Die Formmasse besteht somit, jeweils bezogen auf Menge an A + B + C + D + E, zu 10 bis 75 Gew.-%, vorzugsweise 20 bis 60 Gew.-% aus der Komponente A, zu 10 bis 50 Gew.-%, vorzugsweise 10 bis 40 Gew.-% aus der Komponente B, zu 0 bis 50 Gew.-%, vorzugsweise zu 10 bis 40 Gew.-% aus der Komponente C; zu 20 bis 0,5 Gew.-%, vorzugsweise 0,5 bis 15 Gew.-% aus der Komponente D und zu 5 bis 50 Gew.-%, vorzugsweise 10 bis 40 Gew.-% aus der Komponente E.

Außerdem kann die Formmasse, bezogen auf je 100 Gew.-Teile der Komponenten A bis E noch z.B. bis zu 20 Gew.-Teile an üblichen Zusatzstoffen enthalten.

Komponente A

Als Polycarbonat (Komponente A) können die bekannten Polycarbonate verwendet werden. Unter Polycarbonaten A im Sinne der erfindungsgemäßen Formmasse sollten Polycarbonate auf der Basis von Homopolycarbonaten und Copolycarbonaten von Bisphenolen verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physics of Polycarbonates, Interscience Publishers, New York, 1964, in der US-PS 299 835 und in der DE-OS 22 48 817 beschrieben sind. Besonders bevorzugt sind Polycarbonate auf der Basis von Bisphenol A, nämlich 2,2-Bis(4-hydroxyphenyl)propan. Die Synthese der Polycarbonate wird beispielsweise in der US-PS 2 999 835 und der GB-PS 772 627 beschrieben.

Die Komponente A weist im allgemeinen ein mittleres Molekulargewicht $\overline{M}_w$ im Bereich von 25.000 bis 200.000, bestimmt durch Lichtstreuung, auf.

Komponente B

Die Komponente B ist ein Pfropfmischpolymerisat. Diese Pfropfmischpolymerisate sind aufgebaut, jeweils bezogen auf B, aus einer Pfropfhülle aus 10 bis 50 Gew.-%, vorzugsweise 10 bis 40 Gew.-%, eines Gemisches aus mindestens einem vinylaromatischen Monomeren $b_2$), das bis zu 12 C-Atome im Molekül enthält oder Methyl(meth)acrylat und 1 bis 50 Gew.-%, vorzugsweise 5 bis 45 Gew.-%, mindestens eines Methacrylsäureesters und/oder (Meth)acrylnitril $b_2$) und einer Pfropfgrundlage aus 40 bis 89 Gew.-%, insbesondere 45 bis 80 Gew.-%, eines Elastomeren $b_1$).

Die Herstellung der Pfropfmischpolymerisate B ist an sich bekannt. Sie können z.B. hergestellt werden durch Polymerisation eines Gemisches von Styrol oder Methyl(meth)acrylat und Acrylnitril und/oder (Meth)-acrylnitril in Gegenwart eines Kautschuks.

Der Kautschuk $b_1$) soll eine Glastemperatur [nach K.H. Illers und H. Breuer, Kolloid-Zeitschrift 167, (1961), Seite 110] haben, die unter 0°C. vorzugsweise unter -30°C liegt. Als Kautschuk kommen z.B. in Betracht: Polybutadien (vgl. DE-OS 14 20 775 und DE-OS 14 95 089) Copolymerisate aus Butadien und Styrol (vgl. GB-PS 649 166), Polyacrylsäureester (vgl. DE-AS 12 60 135), sowie Copolymerisate aus Acrylsäureester und Butadien (vgl. DE-AS 12 38 207), ferner Elastomere von Copolymerisaten aus Acrylsäureestern mit Styrol, Acrylnitril und Vinylethern und Copolymerisate aus Ethylen, Propylen und einem nicht konjugierten Dien (EPDM-Kautschuke).

Die vinylaromatischen Pfropfmonomeren $b_2$) sind Styrol, $\alpha$-Methylstyrol und/oder kernalkylierte Styrole mit bis zu 12 C-Atomen im Molekül oder Methyl(meth)acrylat; als Monomere $b_3$) kommen (Meth)-acrylsäurealkylester mit $C_1$-$C_8$-Alkylresten sowie (Meth)acrylnitril oder Mischungen davon in Betracht.

Die Pfropfcopolymerisation kann wie bekannt in Lösung. Suspension oder vorzugsweise in Emulsion erfolgen. Die Weichphase des Pfropfmischpolymerisats weist, bei der bevorzugten Herstellung des Kautschuks und der Pfropfung in Emulsion, einen mittleren Teilchendurchmesser ($d_{50}$-Wert der integralen Masseverteilung) von 0,08 $\mu$m auf. In der Regel liegt nach der Vergrößerung der Teilchen, z.B. durch Agglomeration, der $d_{50}$-Wert im Bereich 0,1 bis 0,6 $\mu$m. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenden Doppelbindungen erfolgt. Zumindest ein Teil der Monomeren ist also auf den Kautschuk gepfropft, also durch covalente Bindungen an den Kautschuk-Fadenmolekülen gebunden.

Der Teil der Monomeren, der nicht auf den Kautschuk gepfropft ist, copolymerisiert für sich. Dieses Copolymerisat kann bei den hier in Rede stehenden Gemischen der Komponente C zugerechnet werden. Man kann den Anteil der gepfropften Monomeren dadurch ermitteln, daß man den Gelgehalt der Pfropfcopolymeren bestimmt: Das Pfropfcopolymerisat wird in einem Lösungsmittel, z.B. in Methylethylketon gelöst; dabei lösen sich nur die nichtgepfropften, für sich allein copolymerisierten Monomeren.

Komponente C

Als Komponente C der erfindungsgemäßen Formmassen werden Styrol-(Meth)acrylnitril-Copolymerisate, Styrol-Methyl(meth)acrylat-Copolymere oder Copolymerisate aus Styrol, Methyl(meth)acrylat und (Meth)-acrylnitril verwendet; diese bestehen im wesentlichen aus Copolymerisaten, die 10 bis 50 Gew.%, insbesondere 15 bis 40 Gew.-% Meth(acrylnitril und/oder Methyl(meth)acrylat, vorzugsweise (Meth)-acrylnitril als Monomere $c_2$) und 50 bis 90 Gew.-%, insbesondere 60 bis 85 Gew.-% Styrol, $\alpha$-Methylstyrol

und/oder ein kernalkylsubstituiertes Styrol bzw. Methyl(meth)acrylat oder deren Mischungen als Monomere $c_1$ einpolymerisiert enthalten.

Der Styrolbestandteil kann, um die Wärmeformbeständigkeit zu verbessern, ganz oder teilweise durch α-Methylstyrol oder kernalkyliertes Styrol, insbesondere p-Methylstyrol, ersetzt sein. Die besonders bevorzugt angewendeten Styrol-Acrylnitril-Copolymeriste sind im Handel erhältlich und können z.B. nach der Lehre der DE-AS 10 01 001 bzw. DE-PS 1 003 436 hergestellt werden. Der Molekulargewichtsbereich der Copolymerisate kann z.B. 80,000 bis 500,000 (Gewichtsmittel $M_w$ aus Lichtstreuung) betragen.

Komponente D

Das Terpolymerisat D kann durch Emulsionspolymerisation oder durch kontinuierliche Mischpolymerisation in Lösung hergestellt werden.

Vorzugsweise wird die Technik der Emulsionspolymerisation angewendet.

Die Technik der Emulsionspolymerisation ist bekannt und beschrieben in

1. Ullmann's Encyklopädie der technischen Chemie, Band 19, 4. Auflage, 1980, Seite 132 - 145
2. Encyclopedia of Polymer Science and Engineering

| First Edition | Band 5 | Seite 801 - 859 |
| Second Edition | Band 6 | Seite 1 - 51 |

Dabei werden Feststoffgehalte zwischen 5 und 75 Vol.% verwendet, vorzugsweise zwischen 10 und 65 Vol.%. Als Polymerisationsinitiatoren werden radikalbildende Stoffe, wie Kaliumpersulfat, Natriumpersulfat, organische Peroxide und Azo-Verbindungen eingesetzt.

Als Emulgatoren können anionische, kationische und amphoterische Typen verwendet werden.

Bei der kontinuierlichen Mischpolymerisation in Lösung wird das Terpolymere aus den Monomeren $d_1$), $d_2$) und $d_3$) bei hohen Temperaturen unter starkem Rühren hergestellt. Die Monomeren $d_1$), $d_2$) und $d_3$) werden dazu kontinuierlich in ein Polymerisationsgefäß eingebracht und gleichzeitig wird eine diesen Mengen entsprechende Menge des Polymerisationsgemisches aus dem Gefäß abgezogen (vgl. A.W. Hanson, R.L. Zimmermann, industrial Eng. Chemistry 49. (1957) Seilte 803). Das Monomere $d_1$), das im wesentlichen Styrol und/oder α-Methylstyrol ist, aber auch ein kernalkyliertes Styrol, wie p-Methylstyrol oder p-tert. -Butylstyrol sein kann, ist in Mengen von 50 bis 90 Gew.%, vorzugsweise von 60 bis 85 Gew.%, das Monomere $d_2$) (Meth)acrylnitril und/oder Methyl(meth)acrylat, vorzugsweise Acrylnitril und/oder Methylmethacrylat, in Mengen von 5 bis 40 Gew.%. vorzugsweise 10 bis 35 Gew.% und das Monomere $d_3$), t.-Butyl-(meth)acrylat in Mengen von 5 bis 30 Gew.%, vorzugsweise 5 bis 25 Gew.% im Copolymerisat D enthalten (einpolymerisiert).

Das Terpolymerisat weist eine Viskositätszahl im Bereich von 30 bis 150, vorzugsweise von 40 bis 120, gemessen in einer 0,5 %igen Lösung in Dimethylformamid bei 25°C auf.

Komponente E

Die erfindungsgemäße Formmasse enthält übliche Verstärkungsmittel, wie Glasfasern, Glaskugeln, Mineralfasern, Whisker, Aluminiumoxidfasern, Glimmer, Quarzmehl, Wollastonit etc.. Besonders bevorzugt sind glasfaserverstärkte Formmassen, wobei die Glasfasern sowohl als Kurzglasfasern mit einer mittleren Länge von 0,05 bis 1,5 mm oder in Granulatlänge (Glasfaserlänge von 2,0 bis 10 mm) vorliegen können.

Die verwendeten Glasfasern können aus E-, A- oder C-Glas sein. Sie sind i.a. mit einer Schlichte und einem Haftvermittler ausgerüstet. Ihr Durchmesser liegt im allgemeinen zwischen 6 und 20 μm. Es können sowohl Endlosfasern (rovings) als auch Schnittglasfasern mit einer Länge von 1 bis 10 mm, vorzugsweise 3 bis 6 mm eingesetzt werden.

Zusatzstoffe

Die erfindungsgemäße Formmasse kann neben Verstärkungsmitteln verschiedene Zusatzstoffe aufweisen. Als Zusatzstoffe seien genannt: Pigmente, Farbstoffe, Füllstoffe, Flammschutzmittel, weitere verträgliche Polymere, Antistatika, Antioxidantien und Schmiermittel. Als Füllstoffe kommen z.B. Talkum, Kaolin, calcinierter Kaolin oder Kreide in Frage.

Die erfindungsgemäßen Formmassen werden nach den üblichen, für die Verarbeitung von Thermoplasten bekannten Verfahren z.B. Spritzguß oder Tiefziehen zu Fertigteilen verarbeitet. Sie finden insbesondere Verwendung für Gehäuse von Elektrogeräten. Haushaltsgeräten, Telefonen, für Platten, Rohre, Folien, Kinderspielzeug und im Kraftfahrzeugbau.

Herstellung der erfindungsgemäßen Formmassen aus den Komponenten

Die Herstellung der erfindungsgemäßen Formasse kann, wie nachstehend beschrieben, erfolgen:
Die Komponente A, B, C und D werden als Schmelzen bei einer Temperatur zwischen 200 und 280°C in einem Extruder auf einer Walze oder in einem Kneter bei einer Verweilzeit von einigen Minuten mit den Verstärkungsmitteln E gemischt. Man kann aber auch Lösungen der Komponenten A, B, C und D oder Teilmischungen, z.B. A + B, herstellen, die Lösungsmittel anschließend entfernen (entgasen) und diese Mischungen oder Teilmischungen mit den Verstärkungsmitteln E konfektionieren und dann gegebenenfalls mit den Zusatzstoffen abmischen und nochmals konfektionieren. Das Vermischen der Komponenten A, B, C und D erfolgt vorzugsweise in Gegenwart bzw. unter Zugabe der Verstärkungsmittel E und der Zusatzstoffe F.

Eine besonders bevorzugte Ausführungsform besteht darin, das Terpolymerisat D in Form einer wäßrigen Dispersion (hergestellt durch Emulsionspolymerisation oder durch Sekundärdispersion des fertigen Polymeren in Pulverform in Wasser unter Zuhilfenahme üblicher Emulgatoren und/oder Suspendierhilfsmittel) direkt auf den Glasfaserstrang zu geben bzw. diesen mit der Dispersion zu tränken und zusammen mit den Glasfasern in eine Öffnung des Extruders in diesen einzutragen und mit der Schmelze der Komponenten A + B + C zu vereinigen, wobei das enthaltene Wasser verdampft bzw. im Vakuum abgezogen wird.

Die in den Beispielen und Vergleichsversuchen genannten Parameter wurden wie folgt bestimmt:

1. Die Kerbschlagzähigkeit, $a_k$, und Schlagzähigkeit, $a_n$, in [$kJ/m^2$] wurde nach DIN 53 453 an spritzgegossenen Normkleinstäben bei einer Massetemperatur von 260°C gemessen.

2. Der Elastizitätsmodul in [$N/mm^2$] wurde gemäß DIN 53 457 bestimmt.

3. Die Viskositätszahl (VZ; $\eta$sp/c) in [ml/g] wurde bei 25°C in einer 0,5 %igen Lösung in Dimethylformamid gemessen, im Falle des Polycarbonats in einer 0,5%igen Lösung in Methylenchlorid.

4. Der Gelbstich der Produkte wurde subjektiv-visuell an spritzgegossenen Rundscheiben ermittelt.

5. Die Reißfestigkeit, $\sigma_R$, [$N/mm^2$] wurde nach DIN 53 455 bestimmt.

Für die Herstellung der erfindungsgemäßen Formmasse und der Vergleichsproben wurden die nachfolgend beschriebenen Produkte verwendet: (Alle Prozentangaben in Gew.%)

Komponenten $A_1$ und $A_2$

Aromatische Polycarbonate auf Basis 2,2-Bis-(4-hydroxiphenyl)-propan (Bisphenol A) mit relativen Viskositätszahlen von

$A_1$: VZ = 52,0 ml/g

$A_2$: VZ = 61,2 ml/g

Komponenten $B_1$ und $B_2$

$B_1$: 75 % Polybutadienkautschuk, gepfropft mit 25 % Styrol/Acrylnitril im Verhältnis 70:30, mittlere Teilchengröße 200 nm.

$B_2$: 75 % Polybutylacrylatkautschuk, gepfropft mit 25 % Styrol/Acrylnitril im Verhältnis 75:25, mittlere Teilchengröße 400 nm.

Komponente C

S-AN-Copolymerisat; 35 % AN; VZ = 80 ml/g (0,5%ig in DMF)

Komponenten $D_1$ bis $D_5$

$D_1$: S-AN-t-BA-Terpolymerisat; 65 % Styrol, 26 % AN, 9 % t-BA, VZ = 74 ml/g

$D_2$: S-AN-t-BA-Terpolymerisat; 65 % Styrol; 16 AN; 19 % t-BA; VZ = 80 ml/g

$D_3$: S-AN-MSA-Terpolymerisat; 67 % Styrol, 22 % AN, 11 % MMA; VZ = 73 ml/g (0,5 %ig in DMF)

$D_4$: S-AN-MMA-Terpolymerisat: 65 % Styrol, 24 % AN; 11 % MMA, VZ = 75 ml/g (0,5 %ig in DMF)

$D_5$:   S-AN-AS Terpolymerisat 65 % Styrol; 24 % AN; 11 % AS; VZ = 74 ml/g (0,5 % in DMF)

Herstellung des Terpolymerisats $D_1$

In einem 1 m$^3$ Rührkessel wurden
300,0 kg VE Wasser
6,0 kg $C_{12}$-$C_{18}$ Paraffinsulfonsäure (Emulgator) (40 %ig in Wasser)
0,8 kg Kaliumpersulfat (Initiator)
vorgelegt und zweimal mit 7 bar Stickstoff abgepreßt. Bei 75 Upm wurde auf 80°C geheizt, ein gerührter Zulauf aus
129,0 kg Styrol
51,6 kg Acrylnitril
17,9 kg t-Butylacrylat
0,7 kg t-Dodecylmerkaptan
über 4 Stunden zudosiert und danach 2 Stunden nachpolymerisiert.
Der Feststoffgehalt betrug 39,2 %.

Herstellung der Terpolymerisate $D_2$, $D_4$ und $D_5$

Diese Dispersionen wurden hergestellt wie $D_1$, jedoch mit geänderten Zuläufen.

| Dispersion | $D_2$ | $D_4$ | $D_5$ |
|---|---|---|---|
| Styrol | 129,0 | 129,0 | 129,0 kg |
| Acrylnitril | 31,8 | 47,6 | 47,6 kg |
| t-Butylacrylat | 37,7 | - | - kg |
| Methylmethacrylat | - | 21,8 | - kg |
| Acrylsäure | - | - | 21,8 kg |
| t-Dodecylmercaptan | 0,7 | 0,7 | 0,7 kg |
| Feststoffgehalt | 39,2 | 39,4 | 39,1 |

Das Polymer wurde aus der Dispersion durch Sprühtrocknung als Pulver gewonnen und in dieser Form bei der Herstellung der Endabmischungen eingesetzt.

Herstellung des Styrol/Acrylnitril/Maleinsäureanhydrid-Terpolymerisats $D_3$

Apparatur

Es wurde ein kontinuierlich durchflossener 100 1-Kessel mit Entgasungsextruder verwendet, wobei MSA und AN (Zusammen mit Styrol) in getrennte Zuläufe gegeben wurde. Da sich MSA nicht in Ethylbenzol löst, wurde dem MSA enthaltenden Zulauf MEK als Lösungsmittel zugesetzt.
In dem folgenden Ansatz beträgt die Summe der Prozentanteile aus Monomeren und Lösungsmitteln 100 %. Starter und Reglermenge beziehen sich auf den Monomerenanteil.
45,00 % Styrol
18,60 % Acrylnitril
14,80 % Ethylbenzol Zulauf I
0,06 % Porofor® N (bezogen auf Monomere)
0,15 % t-Dodecylmercaptan (bezogen auf Monomere)
5,40 % Maleinsäureanhydrid Zulauf II
14,80 % Methylethylketon (MEK)
1,40 % Ethylbenzol Zulauf III
Die Polymerisationsbedingungen waren im einzelnen

| Raum/Zeit-Ausbeute RZA: | 0,143 |
|---|---|
| Temperatur innen: | 94 °C |
| Temperatur Mantel: | 87 °C |
| Zulauf I: | 19,4 l/h |
| Zulauf II: | 4,8 l/h |
| Zulauf III: | 0,4 l/h |
| Feststoffgehalt: | 52 % |
| Umsatz: | 75,4 % |
| Kesselstand: | 80 l |
| Kesseldruck: | 0,3 bar |
| Rührerdrehzahl: | 100 Upm |

Da unter den genannten Polymerisationsbedingungen MSA vollständig einpolymerisiert wird (im Gegensatz zu Styrol und Acrylnitril) mußte das Monomerverhältnis entsprechend angepaßt werden, um die gewünschte Polymerisatzusammensetzung zu erhalten.
Eingestellte Monomerzusammensetzung 65,2 % S/27 % AN/7,8 % MSA
erhalten wurde 67 % S/22 % AN/11 % MSA.

Komponente E

E-Glasfasern geschnitten 4,5 mm
Faserdurchmesser 10 $\mu$m
Fabrikat OCF 429

Komponente F

Talkum

Beispiele 1 bis 6 und Vergleichsbeispiele I bis V

Die Komponenten $A_n$, $B_n$, C, $D_n$, E und die Zusatzstoffe E der Formmassen wurden in den in der Tabellen 1 genannten Mengen in einem Fluidmischer vorgemischt und anschließend auf einem Kokneter bei etwa 260 bis 270°C unter Stickstoff innig verknetet. Die Verweilzeit betrug 5 Minuten. Das dabei erhaltene Granulat wurde auf einer Einwellen-Extruder-Schnecke aufgeschmolzen und zu gleichmäßigen, für die Spritzgußverarbeitung geeignetem Granulat abgeschlagen. In der Tabelle 1 sind die Eigenschaften der erhaltenen Mischungen aufgeführt.

7

Tabelle 1

| Beispiel | Zusammensetzung Gew.-Teile | $a_k$ $[kJ/m^2]$ | $a_n$ $[kJ/mm^2]$ | $\sigma_R$ $[N/mm^2]$ | E-Modul $[N/mm^2]$ | Gelbstich |
|---|---|---|---|---|---|---|
| 1 | 40 $A_1$<br>14 $B_2$<br>12 C<br>9 $D_1$<br>25 E | 11 | 25 | 118 | 9860 | kein Gelbstich |
| 2 | 38 $A_2$<br>16 $B_1$<br>12 C<br>4 $D_2$<br>20 E | 13 | 27 | 114 | 11430 | kaum wahrnehm-bar |
| 3 | 42 $A_2$<br>13 $B_1$<br>14 C<br>6 $D_2$<br>25 E | 12 | 24 | 108 | 10040 | kein Gelbstich |
| 4 | 30 $A_1$<br>15 $B_2$<br>15 C<br>9 $D_2$<br>31 E | 10 | 21 | 105 | 11980 | kaum wahrnehm-bar |
| 5 | 42 $A_2$<br>14 $B_1$<br>14 C<br>10 $D_1$<br>20 E | 12 | 23 | 112 | 9430 | sehr schwach |
| 6 | 47 $A_2$<br>10 $B_2$<br>10 C<br>3 $D_2$<br>30 E | 10 | 21 | 110 | 10600 | kein Gelbstich |

Tabelle 1   - Fortsetzung -

| Vergl. Beispiel | Zusammensetzung Gew.-Teile | | $a_k$ [kJ/m²] | $a_n$ [kJ/mm²] | $\sigma_R$ [N/mm²] | E-Modul [N/mm²] | Gelbstich |
|---|---|---|---|---|---|---|---|
| I | 40 | $A_1$ | 10 | 19 | 114 | 9470 | deutlich sichtbar |
| | 14 | $B_2$ | | | | | |
| | 12 | C | | | | | |
| | 9 | $D_3$ | | | | | |
| | 25 | E | | | | | |
| II | 38 | $A_2$ | 12 | 21 | 112 | 10990 | deutlich sichtbar |
| | 16 | $B_1$ | | | | | |
| | 12 | C | | | | | |
| | 4 | $D_3$ | | | | | |
| | 30 | E | | | | | |
| III | 42 | $A_2$ | 6 | 16 | 92 | 5160 | kein Gelbstich |
| | 14 | $B_1$ | | | | | |
| | 14 | C | | | | | |
| | 10 | $D_4$ | | | | | |
| | 20 | E | | | | | |
| IV | 30 | $A_1$ | 8 | 17 | 103 | 10670 | deutlich sichtbar |
| | 15 | $B_2$ | | | | | |
| | 15 | C | | | | | |
| | 9 | $D_4$ | | | | | |
| | 31 | E | | | | | |

## Patentansprüche

1.  Verstärkte thermoplastische Formmasse, enthaltend
    jeweils bezogen auf A + B + C + D + E
    A) 10 bis 75 Gew.-% mindestens eines Polycarbonats A,
    B) 10 bis 50 Gew.-% eines Pfropfmischpolymerisats B aus,
    jeweils bezogen auf B,
       $b_1$) 40 bis 90 Gew.-% mindestens eines Kautschuks mit einer Glastemperatur unterhalb von 0 °C
       $b_2$) 10 bis 90 Gew.-% einpolymerisierten Einheiten mindestens eines vinylaromatischen Monomeren mit bis zu 12 C-Atomen oder Methyl(meth)acrylat und
       $b_3$) 50 bis 1 Gew.-% einpolymerisierten Einheiten von (Meth)acrylnitril oder (Meth)-acrylsäureestern mit $C_1$-$C_8$-Alkylresten
    C) 0 bis 50 Gew.-% eines Copolymeren C aus, jeweils bezogen auf C
       $c_1$) 90 bis 50 Gew.-% einpolymerisierten Einheiten, ausgewählt aus der Gruppe von Styrol, $\alpha$-Methylstyrol und einem kernalkylsubstituierten Styrol
       $c_2$) 10 bis 50 Gew.-% einpolymerisierten Einheiten von (Meth)acrylnitril oder Methyl(meth)acrylat
    D) 20 bis 0,5 Gew.-% eines Terpolymerisats D aus,
    jeweils bezogen auf D
       $d_1$) 90 bis 50 Gew.-% einpolymerisierten Einheiten ausgewählt aus der Gruppe von Styrol, $\alpha$-Methylstyrol und einem kernalkylsubstituierten Styrol
       $d_2$) 5 bis 40 Gew.-% einpolymerisierten Einheiten von (Meth)acrylnitril und/oder Methyl(meth)-acrylats
       $d_3$) 5 bis 30 Gew.-% einpolymerisierten Einheiten des Tertiärbutyl-(meth)acrylats.
    E) 5 bis 50 Gew.-% eines Verstärkungsmittels E.

9

**2.** Formmasse nach Anspruch 1, dadurch gekennzeichnet, daß sie zusätzlich übliche Zusatzstoffe enthält.

**3.** Formmasse nach Anspruch 1 oder 2 enthaltend,
jeweils bezogen auf A + B + C + D + E
    A) 20 bis 60 Gew.-% eines Polycarbonats A
    B) 10 bis 40 Gew.-% eines Pfropfmischpolymerisats B aus,
    bezogen auf B
        $b_1$) 45 bis 80 Gew.-% Kautschuk mit einer Glastemperatur unterhalb von $0°C$
        $b_2$) 10 bis 40 Gew.-% eines vinylaromatischen Monomeren mit bis zu 12 C-Atomen oder Methyl-
        (meth)acrylat
        $b_3$) 45 bis 5 Gew.-% (Meth)acrylnitril und/oder Methyl(meth)acrylat
    C) 10 bis 40 Gew.-% eines Copolymeren C aus, bezogen auf C
        $c_1$) 85 bis 60 Gew.-% Styrol, $\alpha$-Methylstyrol, oder einem kernalkyliertem Styrolderivat,
        $c_2$) 15 bis 40 Gew.-% (Methyl)acrylnitril und/oder Methyl(meth)acrylat
    D) 0,5 bis 15 Gew.-% eines Terpolymerisats D aus, bezogen auf D,
        $d_1$) 85 bis 60 Gew.-% Styrol, $\alpha$-Methylstyrol oder einem kernalkylsubstituierten Styrol
        $d_2$) 10 bis 35 Gew.-% (Meth)acrylnitril und/oder Methyl(meth)acrylat
        $d_3$) 5 bis 25 Gew.-% Tertiär-butyl(meth)acrylat
    E) 10 bis 40 % eines Verstärkungsmittels E.

**4.** Formmasse nach Anspruch 1 oder 2 enthaltend,
jeweils bezogen auf A + B + C + D + E
    A) 20 bis 60 Gew.-% mindestens eines Polycarbonats A,
    B) 10 bis 40 Gew.-% eines Pfropfmischpolymerisats B aus,
    jeweils bezogen auf B
        $b_1$) 45 bis 80 Gew.-% Kautschuk mit einer Glastemperatur unterhalb von $-30°C$
        $b_2$) 10 bis 40 Gew.-% Styrol und/oder $\alpha$-Methylstyrol
        $b_3$) 45 bis 5 Gew.-% (Meth)acrylnitril
    C) 10 bis 40 Gew.-% eines Copolymeren C aus
        $c_1$) 85 bis 60 % Styrol und/oder $\alpha$-Methylstyrol
        $c_2$) 15 bis 40 Gew.-% (Meth)acrylnitril
    D) 0,5 bis 15 Gew.-% eines Terpolymerisats D aus
        $d_1$) 85 bis 60 Gew.-% Styrol und/oder $\alpha$-Methylstyrol
        $d_2$) 10 bis 35 Gew.-% (Meth)acrylnitril
        $d_3$) 5 bis 25 Gew.-% Tertiärbutyl-(meth)acrylat.
    E) 10 bis 40 Gew.-% Glasfasern.

**5.** Verfahren zur Herstellung von Formmassen nach einem der Ansprüche 1 bis 4 durch Mischen der Bestandteile A bis E in der Schmelze.

**6.** Verwendung der Formmasse nach einem der Ansprüche 1 bis 4 zur Herstellung von Formteilen.

**Claims**

**1.** A reinforced thermoplastic molding material, containing,
based in each case on A + B + C + D + E,
    A) from 10 to 75% by weight of at least one polycarbonate A,
    B) from 10 to 50% by weight of a graft copolymer B comprising,
    based in each case on B,
        $b_1$) from 40 to 90% by weight of at least one rubber having a glass transition temperature below $0°C$,
        $b_2$) from 10 to 90% by weight of polymerized units of at least one vinylaromatic monomer of not more than 12 carbon atoms or methyl (meth)acrylate and
        $b_3$) from 50 to 1% by weight of polymerized units of (meth)acrylonitrile or (meth)acrylates having $C_1$-$C_8$-alkyl radicals,
    C) from 0 to 50% by weight of a copolymer C comprising, based in each case on C,
        $c_1$) from 90 to 50% by weight of polymerized units selected from the group consisting of styrene, $\alpha$-methylstyrene and a styrene which is alkyl-substituted in the nucleus and

$c_2$) from 10 to 50% by weight of polymerized units of (meth)acrylonitrile or methyl (meth)acrylate,

D) from 20 to 0.5% by weight of a terpolymer D comprising,

based in each case on D,

$d_1$) from 90 to 50% by weight of polymerized units selected from the group consisting of styrene, $\alpha$-methylstyrene and a styrene which is alkyl-substituted in the nucleus and

$d_2$) from 5 to 40% by weight of polymerized units of (meth)acrylonitrile or methyl (meth)acrylate and

$d_3$) from 5 to 30% by weight of polymerized units of tert-butyl (meth)acrylate, and

E) from 5 to 50% by weight of a reinforcing agent E.

2. A molding material as claimed in claim 1, which additionally contains conventional additives.

3. A molding material as claimed in claim 1 or 2, containing,

based in each case on A + B + C + D + E,

A) from 20 to 60% by weight of a polycarbonate A,

B) from 10 to 40% by weight of a graft copolymer B comprising, based on B,

$b_1$) from 45 to 80% by weight of a rubber having a glass transition temperature below 0°C,

$b_2$) from 10 to 40% by weight of a vinylaromatic monomer of not more than 12 carbon atoms or methyl (meth)acrylate and

$b_3$) from 45 to 5% by weight of (meth)acrylonitrile or methyl (meth)acrylate,

C) from 10 to 40% by weight of a copolymer C comprising, based on C,

$c_1$) from 85 to 60% by weight of styrene, $\alpha$-methylstyrene or a styrene derivative alkylated in the nucleus and

$c_2$) from 15 to 40% by weight of (meth)acrylonitrile or methyl (meth)acrylate,

D) from 0.5 to 15 % by weight of a terpolymer D comprising, based on D,

$d_1$) from 85 to 60% by weight of styrene, $\alpha$-methylstyrene or a styrene which is alkyl-substituted in the nucleus,

$d_2$) from 10 to 35% by weight of (meth)acrylonitrile or methyl (meth)acrylate and

$d_3$) from 5 to 25% by weight of tert-butyl (meth)acrylate, and

E) from 10 to 40% by weight of a reinforcing agent E.

4. A molding material as claimed in claim 1 or 2, containing,

based in each case on A + B + C + D + E,

A) from 20 to 60% by weight of at least one polycarbonate A,

B) from 10 to 40% by weight of a graft copolymer B comprising,

based in each case on B,

$b_1$) from 45 to 80% by weight of a rubber having a glass transition temperature below -30°C,

$b_2$) from 10 to 40% by weight of styrene or $\alpha$-methylstyrol and

$b_3$) from 45 to 5% by weight of (meth)acrylonitrile,

C) from 10 to 40% by weight of a copolymer C comprising

$c_1$) from 85 to 60% by weight of styrene or $\alpha$-methylstyreneand

$c_2$) from 15 to 40% by weight of (meth)acrylonitrile,

D) from 0.5 to 15 % by weight of a terpolymer D comprising

$d_1$) from 85 to 60% by weight of styrene or $\alpha$-methylstyrene,

$d_2$) from 10 to 35% by weight of (meth)acrylonitrile and

$d_3$) from 5 to 25% by weight of tert-butyl (meth)acrylate,

and

E) from 10 to 40% by weight of glass fibers.

5. A process for the preparation of a molding material as claimed in any of claims 1 to 4 by mixing the components A to E in the melt.

6. Use of a molding material as claimed in any of claims 1 to 4 for the production of moldings.

**Revendications**

1. Masse à mouler thermoplastique renforcée, contenant, chaque fois par rapport à A + B + C + D + E,

A) de 10 à 75% en poids d'au moins un polycarbonate A,

EP 0 345 652 B1

B) de 10 à 50% en poids d'un copolymère greffé B à base, chaque fois par rapport à B,

$b_1$) de 40 à 90% en poids d'au moins un caoutchouc ayant une température de transition vitreuse inférieure à 0°C,

$b_2$) de 10 à 90% en poids de motifs en liaison polymère d'au moins un monomère vinylaromatique renfermant jusqu'à 12 atomes de carbone ou de (méth)acrylate de méthyle et

$b_3$) de 50 à 1% en poids de motifs en liaison polymère de (méth)acrylonitrile ou d'esters d'acide (méth)acrylique à 1-8 atomes de carbone dans les restes alkyle,

C) de 0 a 50% en poids d'un copolymère C a base, chaque fois par rapport à C,

$c_1$) de 90 à 50% en poids de motifs en liaison polymère choisis dans le groupe du styrène, de l'$\alpha$-methylstyrène et d'un styrène alkyl-substitué sur le noyau et

$c_2$) de 10 à 50% en poids de motifs en liaison polymère de (méth)acrylonitrile ou de (méth)-acrylate de méthyle,

D) de 20 à 0,5% en poids d'un terpolymère D à base, chaque fois par rapport à D,

$d_1$) de 90 à 50% en poids de motifs en liaison polymère choisis dans le groupe du styrène, de l'$\alpha$-méthylstyrène et d'un styrène alkyl-substitué sur le noyau,

$d_2$) de 5 à 40% en poids de motifs en liaison polymère de (méth)acrylonitrile et/ou de (méth)-acrylate de méthyle et

$d_3$) de 5 à 30% en poids de motifs en liaison polymère du (méth)acrylate de tert.-butyle,

E) de 5 à 50% en poids d'un agent de renforcement E.

2. Masse à mouler selon la revendication 1, caractérisée en ce qu'elle contient en plus des additifs usuels.

3. Masse à mouler selon la revendication 1 ou 2, contenant, chaque fois par rapport à A + B + C + D + E,

A) de 20 à 60% en poids d'un polycarbonate A,

B) de 10 à 40% en poids d'un copolymère greffé B à base, par rapport à B,

$b_1$) de 45 à 80% en poids de caoutchouc ayant une température de transition vitreuse inférieure à 0°C,

$b_2$) de 10 à 40% en poids d'un monomère vinylaromatique renfermant jusqu'à 12 atomes de carbone ou de (méth)acrylate de méthyle et

b3) de 45 à 5% en poids de (méth)acrylonitrile et/ou de (méth)acrylate de méthyle,

C) de 10 à 40% en poids d'un copolymère C à base, chaque fois par rapport à C,

$c_1$) de 85 à 60% en poids de styrène, d'$\alpha$-méthylstyrèneou d'un dérivé du styrène alkylé sur le noyau et

$C_2$) de 15 à 40% en poids de (méth)acrylonitrile et/ou de (méth)acrylate de méthyle,

D) de 0,5 à 15% en poids d'un terpolymère D à base, par rapport à D,

$d_1$) de 85 à 60% en poids de styrène, d'$\alpha$-méthylstyrèneou d'un styrène alkyl-substitué sur le noyau,

$d_2$) de 10 à 35% en poids de (méth)acrylonitrile et/ou de (méth)acrylate de méthyle et

$d_3$) de 5 à 25% en poids de (méth)acrylate de tert.-butyle,

E) de 10 à 40% en poids d'un agent de renforcement E.

4. Masse à mouler selon la revendication 1 ou 2, contenant, chaque fois par rapport à A + B + C + D + E,

A) de 20 à 60% en poids d'au moins un polycarbonate A,

B) de 10 à 40% en poids d'un copolymère greffé B à base, chaque fois par rapport à B,

$b_1$) de 45 à 80% en poids de caoutchouc ayant une température de transition vitreuse inférieure à -30°C,

$b_2$) de 10 à 40% en poids de styrène et/ou d'$\alpha$-méthylstyrène et

b3) de 45 à 5% en poids de (méth)acrylonitrile,

C) de 10 à 40% en poids d'un copolymère C à base

$c_1$) de 85 à 60% en poids de styrène et/ou d'$\alpha$-méthylstyrène et

$c_2$) de 15 à 40% en poids de (méth)acrylonitrile,

D) de 0.5 à 15% en poids d'un terpolymère D à base

$d_1$) de 85 à 60% en poids de styrène et/ou d'$\alpha$-méthylstyrène,

$d_2$) de 10 à 35% en poids de (méth)acrylonitrile et

$d_3$) de 5 à 25% en poids de (méth)acrylate de tert.-butyle,

E) de 10 à 40% en poids de fibres de verre.

12

**5.** Procédé de préparation de masses à mouler selon l'une quelconque des revendications 1 à 4, par mélange des constituants A à E dans la masse fondue.

**6.** Utilisation de la masse à mouler selon l'une quelconque des revendications 1 à 4 pour la fabrication de pièces moulées.